# EUROPEAN PATENT APPLICATION

(11) **EP 4 451 037 A1**
(43) Date of publication of application: **23.10.2024**
(21) Application number: 23169073.6
(22) Date of filing: 20.04.2023
(51) Int. Cl.: G02B 21/36, G06F 18/214, G06F 18/21, G06N 3/00

(54) **CONSTRUCTION OF A DIGITAL IMAGE DEPICTING A SAMPLE**

(71) Applicant: CellaVision AB, 223 62 Lund (SE)
(72) Inventor: Almers, Martin, 226 51 Lund (SE); Hedlund, Sven, 226 57 Lund (SE); Jönsson, Jesper, 224 80 Lund (SE)
(74) Representative: AWA Sweden AB

(57) **Abstract**

The present inventive concept relates to a method and a device for training a machine learning model to construct a digital image depicting a sample. The method (30) comprising: receiving (S300) a training set of digital images of a training sample (1080), wherein the training set of digital images is acquired (S310) using a first microscope objective (104) and by: illuminating (S312) the training sample (1080) with a plurality of illumination patterns, and capturing (S314) a digital image for each illumination pattern of the plurality of illumination patterns; receiving (S320) a ground truth comprising a digital image depicting the training sample (1080), wherein the digital image of the ground truth is acquired (S330) using a second microscope objective (204) and by: illuminating (S332) the training sample with a conventional microscopy illumination pattern, and capturing (S334) the digital image while the training sample (1080) is illuminated with the conventional microscopy illumination pattern; and training (S340) the machine learning model to construct a digital image depicting the training sample (1080) using the received training set of digital images and the received ground truth; and wherein the second microscope objective (204) has a higher numerical aperture than the first microscope objective (104), whereby a resolution of the digital image of the ground truth is higher than a resolution of at least one digital image of the training set of digital images. The present inventive concept further relates to a method and a microscope arrangement for constructing a digital image depicting a sample.

## Description

### Technical field

The present inventive concept relates to construction of a digital image depicting a sample.

### Background of the invention

In the field of digital microscopy, a typical task is to find and identify objects within a sample. For instance, within hematology, cytology, and pathology, specific cell types may be found and identified in order to establish a diagnose for the patient from which the sample is taken. A different example is imaging of manufactured components. For instance, circuits and miniaturized electronics are often imaged using microscopes for quality-control purposes.

There exist different techniques for imaging samples. One of the simplest forms of microscopy is bright-field microscopy where the sample is illuminated from below and imaged from above. Typically, images of the samples captured with microscopes have very high magnification (e.g., 100 times), i.e., they are capable of illustrate fine details of the sample. However, a drawback associated with high-magnification microscope objectives is that the field of view of such microscope objective is typically small. Thus, each image captured with a high-magnification microscope only illustrates a small portion of the entire sample. This means that, in order to scan an entire sample, a large amount of images each captured at different sample locations is needed. In turn, this can become very time consuming and can therefore increase associated economical costs.

Further, high-magnification microscope objectives typically include complex arrangements of optics in order to produce images of high quality (e.g., low levels of aberrations at a high magnification). This, in turn, increases economical costs associated with microscope systems comprising such microscope objectives.

### Summary of the invention

In view of the above, it is an object of the present inventive concept to provide a method and device for training a machine learning model to construct a digital image depicting a sample.

A further objective is to provide a method and microscope system for constructing a digital image depicting a sample.

A further objective is to provide a method and microscope system for constructing a digital image depicting a sample at a relatively high resolution using digital images having a relatively low resolution.

A further objective is to, at least partly, mitigate, alleviate or eliminate one or more of the above-identified deficiencies in the art.

According to a first aspect a method for training a machine learning model to construct a digital image depicting a sample is provided. The method comprising: receiving a training set of digital images of a training sample, wherein the training set of digital images is acquired using a first microscope objective and by: illuminating the training sample with a plurality of illumination patterns, and capturing a digital image for each illumination pattern of the plurality of illumination patterns; receiving a ground truth comprising a digital image depicting the training sample, wherein the digital image of the ground truth is acquired using a second microscope objective and by: illuminating the training sample with a conventional microscopy illumination pattern, and capturing the digital image while the training sample is illuminated with the conventional microscopy illumination pattern; and training the machine learning model to construct a digital image depicting the training sample using the received training set of digital images and the received ground truth; and wherein the second microscope objective has a higher numerical aperture than the first microscope objective, whereby a resolution of the digital image of the ground truth is higher than a resolution of at least one digital image of the training set of digital images.

The method according to the first aspect may further comprise: acquiring the training set of digital images of the training sample using the first microscope objective and by: illuminating the training sample with a plurality of illumination patterns, and capturing, for each illumination pattern of the plurality of illumination patterns, a digital image of the sample. The method according to the first aspect may further comprise: acquiring the digital image of the training sample using the second microscope objective and by: illuminating the training sample with the conventional microscopy illumination pattern; and capturing the digital image while the training sample is illuminated with the conventional microscopy illumination pattern.

Within the context of this disclosure, the wording "training" as in "training sample" should be construed as a sample used during training of the machine learning model, as opposed to a general sample which the trained machine learning model is capable of constructing a digital image of. The constructed digital image may then depict the general sample. The machine learning model may, of course, be able to construct a digital image depicting the training sample. The machine learning model may also be able to construct digital images of other samples as well, which may not be part of the training set of digital images. Put differently, the machine learning model may, after training, be able to construct digital images of samples not used for training the machine learning model. Simply "the sample" may be used herein to refer to either the samples used during training or the samples input into the trained machine learning model, depending on the context.

Within the context of this disclosure, the wording "illumination patterns" may be construed as different ways of illuminating the sample using an illumination system. Each illumination pattern may, e.g., be formed by simultaneously illuminating the sample from one or more directions of a plurality of directions, and/or by varying the number of light sources of illumination system that emit light.

Within the context of this disclosure, the wording "ground truth" should be construed as information that is known to be real and/or true. Hence, in this context, since the machine learning model is trained to construct a digital image using the ground truth and the training set of digital images, the ground truth may represent a digital image depicting the training sample.

Within the context of this disclosure, the wording "conventional microscopy illumination pattern" should be construed as an illumination pattern similar to (or identical to) conventional microscope illumination. Put differently, the conventional microscopy illumination pattern may be an illumination pattern which is similar (or identical to) illumination provided by a conventional light source suitable for microscopy. The conventional microscopy illumination pattern may be formed by a conventional light source (e.g., a conventional light source suitable for microscopy). The conventional microscopy illumination pattern may be an illumination pattern suitable for capturing a conventional microscopy image of the training sample. For instance, the conventional microscopy illumination pattern may comprise one or more of a bright-field illumination pattern, a dark-field illumination pattern, and a phase-contrast illumination pattern. It is further to be understood that the conventional microscopy illumination pattern may illuminate a frontside (i.e., a side of the training sample facing the second microscope objective) and/or a backside (i.e., a side of the training sample opposite the frontside of the training sample) of the training sample.

Within the context of this disclosure, the wording "numerical aperture of a microscope objective" should be construed as a dimensionless number associated with a range of angles over which the microscope objective accepts light. Hence, a direction corresponding to an angle larger than the numerical aperture of the microscope objective may be a direction corresponding to an angle outside of (e.g., larger than) the range of angles over which the microscope objective accepts light. Typically, a microscope objective having a higher numerical aperture may have a higher magnification than a microscope objective having a lower numerical aperture.

The machine learning model may be trained to correlate the training set of digital images to the ground truth (e.g., the digital image captured using the second microscope objective and depicting the training sample). The machine learning model may be trained iteratively and/or recursively until a difference between an output of the machine learning model (i.e., the constructed digital image) and the ground truth (i.e., the digital image captured using the second microscope objective and depicting the training sample) is smaller than a predetermined threshold. A smaller difference between the output of the machine learning model and the ground truth may indicate a higher accuracy of the constructed digital image provided by the machine learning model. Put differently, a smaller difference between the output of the machine learning model and the ground truth may indicate that the constructed digital image may to a higher degree replicate a digital image captured using the second microscope objective and depicting the training sample. Hence, preferably, the difference between the output of the machine learning model and the ground truth may be minimized. The machine learning model may be trained to construct digital images of samples for a plurality of different sample types. In such case, the machine learning model may, for each sample type, be trained using a training set of digital images of a training sample of the sample type, and a corresponding ground truth associated with the respective sample type.

By illuminating the training sample with a plurality of illumination patterns and capturing a digital image for each of the plurality of illumination patterns, phase information (typically referred to as quantitative phase within the art) associated with the training sample may be determined. This can be understood as information of different portions of Fourier space (i.e., the spatial frequency domain) associated with the training sample being captured for different illumination directions. This technique may be known in the art as Fourier Ptychographic Microscopy, FPM. The phase information may, in turn, be used to replicate the training sample at different focus positions (i.e., positions of the training sample relative to the first microscope objective used to capture digital images of the training sample). Further, information regarding a refractive index (or a spatial distribution of a refractive index) associated with the training sample may be captured. This can be understood as an effect of refraction of light being dependent on an angle of incident for light illuminating the training sample and the refractive index of the training sample. Furthermore, by illuminating the training sample with a plurality of illumination patterns and capturing a digital image for each illumination pattern of the plurality of illumination patterns, information regarding finer details of the training sample may be captured than what normally is resolvable by, e.g., a microscope using a conventional light source. Thus, even though the training set of digital images is acquired using the first microscope objective which has a smaller numerical aperture than the second microscope objective, the training set of digital images comprises information that may be used by the trained machine learning model to construct a digital image depicting the training sample which is similar to a digital image captured using the second microscope objective (i.e., having a higher resolution). This, since the training sample is illuminated with the plurality of illumination patterns when the training set is acquired.

Hence, since the training set of digital images comprises information associated with one or more of fine details of the training sample, a refractive index associated with the training sample, and phase information associated with the training sample, this information may be used in the training of the machine learning model, which may, in turn, allow for a machine learning model being trained to construct a digital image depicting the training sample at a relatively higher resolution than what would be allowed in case the training set of digital images was captured using the first microscope objective and by using a single illumination pattern (e.g., conventional microscopy illumination or from a single direction) or by using conventional microscopy. Using conventional microscopy, it may be difficult, or even impossible, to capture information associated with the refractive index associated with the training sample and/or phase information associated with the training sample. Put differently, since a digital image captured using conventional microscopy may simultaneously contain information regarding the refraction of light impinging from directions corresponding to overlapping portions of the Fourier space associated with the training sample, it may be impossible using such techniques to determine phase information associated with the training sample and/or information related to the refractive index of the training sample. Put differently, it may not be possible to determine such information related to the training sample using conventional microscopy. Illuminating the training sample with a plurality of illumination patterns may further allow for capturing information relating to details of the training sample which are finer than what normally (using conventional microscopy illumination) is allowed by the first microscope objective used to capture the training set of digital images of the training sample. Thus, a microscope objective having a relatively lower magnification (i.e., lower numerical aperture) may be used while still being able to capture information related to such fine details of the training sample. Using a microscope objective having a relatively lower magnification may, in turn, allow for digital images of larger portions of the training sample to be captured at each imaging position. Hence, the entire training sample may be scanned by capturing digital images at relatively fewer imaging positions which, in turn, may allow for a faster and/or more efficient scanning of the training sample.

Each illumination pattern of the plurality of illumination patterns may be formed by illuminating the training sample using one or more light sources of a plurality of light sources.

An associated advantage is that a more reliable and/or quicker switching between different illumination patterns may be allowed compared to using a single, movable light source capable of illuminating a position from different directions.

One or more light sources of the plurality of light sources may be configured to emit polychromatic light; and wherein each illumination pattern of the plurality of illumination patterns may be formed by illuminating the training sample with polychromatic light.

Within the context of this disclosure, the wording "polychromatic light" should be construed as light having a spectrum comprising a relatively broad range of wavelengths. A spectrum of polychromatic light may be continuous. A spectrum of polychromatic light may be at least partly continuous. A spectrum of polychromatic light may comprise a relatively broad spectrum. A spectrum of polychromatic light may be discontinuous. A spectrum of polychromatic light may comprise a combination of a relatively broad spectrum and a relatively narrow spectrum. Examples of polychromatic light may be white light, quasi-white light, and/or pseudo-white light. White light, quasi-white light, and/or pseudo-white light may, e.g., resemble sunlight. The spectrum of white light may comprise a majority of the visible light spectrum, as opposed to light having a narrow spectrum (e.g., monochromatic light or quasi-monochromatic light). Polychromatic light may have a spectral width of 100 nm or more. Polychromatic light may have a spectral width of 400 nm or less. Narrow-spectrum light may have a spectral width of 50 nm or less. For instance, narrow-spectrum light may have a spectral width of less than 20 nm. Here, "spectral width" may be a range of wavelengths of the light emitted by the one or more light sources. For instance, spectral width may be a range of a majority (or all) wavelengths of light emitted by the one or more light sources. The spectral width may be a full width at half maximum (FWHM) or any other suitable measure used within the art.

An associated advantage is that polychromatic light (e.g., white light, quasi-white light, or pseudo-white light) may allow for more information about the training sample to be captured in the training set of digital images, which otherwise would be missed in parts of the spectrum not covered when using narrowband light sources. In turn, that information may be used by the trained machine learning model when constructing a digital image depicting a sample which to an even higher degree may resemble the sample. For example, using polychromatic light (e.g., white light, quasi-white light, or pseudo-white light) when acquiring the training set of digital images, the trained machine learning model may be able to construct a digital image depicting a sample in color. Light having a spectral width of approximately 50 nm or lower (e.g., 20 nm or lower) may typically be required in imaging applications utilizing Fourier ptychography, and sequentially and/or separately illuminating the sample with several different colors of narrow-spectrum light (e.g., monochromatic light or quasi-monochromatic light) may therefore be needed in prior art systems to capture multispectral information about the sample. Thus, using polychromatic light may reduce a total number of digital images needed to capture multispectral information about the sample compared to prior art systems utilizing Fourier ptychography. Further, using different colors of monochromatic or quasi-monochromatic light may only allow information about the sample for those specific wavelength ranges to be captured, and since polychromatic light may have a broader spectrum, using polychromatic light may allow for capturing information about the sample for a broader wavelength range compared to when using monochromatic or quasi-monochromatic light.

Each light source of the plurality of light sources may be configured to illuminate the training sample from one direction of a plurality of directions.

An associated advantage is that the digital images of the training sample may be captured under different illumination conditions (i.e., with light from different directions), whereby more information (e.g., information associated with a refractive index, etc.) of the training sample may be captured in the captured digital images.

At least one direction of the plurality of directions may correspond to an angle larger than a numerical aperture of the first microscope objective.

By illuminating the training sample from a direction corresponding to an angle larger than the numerical aperture of the image-forming assembly of the first imaging system, the digital image captured for that angle of illumination may comprise information about higher spatial frequencies of the training sample, and thereby finer details of the training sample, than the first microscope objective normally allows (e.g., using conventional microscopy illumination). This may, in turn, allow the capture of phase information associated with the training sample and/or information relating to details of the training sample not normally being resolvable by the first microscope objective, which may be used in the training of the machine learning model. Put differently, illuminating the training sample from a direction corresponding to an angle larger than the numerical aperture of the first microscope objective may allow for an improved machine learning model capable of constructing a digital image depicting a sample.

Two or more directions of the plurality of directions may correspond to overlapping portions of a Fourier space associated with the training sample, and wherein each illumination pattern may be formed by illuminating the training sample from one or more directions corresponding to non-overlapping portions of the Fourier space associated with the training sample.

An associated advantage is that the training sample may be illuminated from several directions simultaneously. In other words, an amount of information associated with the training sample which is captured in each captured digital image may be increased. This, in turn, may reduce a number of digital images needed while still allowing enough information (i.e., enough information for the training process and/or for the process of constructing a digital image using the trained machine learning model) associated with the training sample to be captured. Reducing the number of digital images that need to be captured may reduce a time needed for image capturing, which may allow for a more time-efficient system for constructing a digital image depicting a sample. Further, reducing the number of captured digital images may also reduce memory requirements (e.g., memory needed to store the captured digital images) associated with the training process. Memory requirements associated with the process of constructing a digital image depicting a sample using the trained machine learning model may also be reduced for the same reasons.

Further, by simultaneously illuminating the training sample from directions corresponding to non-overlapping portions of the Fourier space associated with the training sample, separate portions of the Fourier space may be sampled simultaneously. This may, in turn, reduce (or even avoid) entangling (mixing) the information (i.e., the information associated with the training sample) for the different directions.

Since two or more directions of the plurality of directions may correspond to overlapping portions of the Fourier space associated with the training sample, directions forming different illumination patterns may correspond to overlapping portions of the Fourier space associated with the training sample. In turn, this may allow for information pertaining to a larger, and possibly continuous, part of the Fourier space associated with the training sample to be captured in the digital images of the training set of digital images.

According to a second aspect, a method for constructing a digital image depicting a sample is provided. The method comprising: receiving an input set of digital images of the sample, wherein the input set of digital images is acquired by illuminating the sample with a plurality of illumination patterns and capturing a digital image for each illumination pattern of the plurality of illumination patterns; constructing a digital image depicting the sample by: inputting the input set of digital images into a machine learning model being trained according to the method of the first aspect and receiving, from the machine learning model, an output comprising the digital image depicting the sample.

The input set of digital images of the sample may be acquired using a microscope objective having a numerical aperture similar, or identical, to the first microscope objective used to acquire the training set of digital images. The plurality of illumination patterns used when acquiring the input set of digital images of the sample may be similar, or identical, to the plurality of illumination patterns used to acquire the training set of digital images.

By using the machine learning model trained according to the method of the first aspect, a digital image depicting the sample having a higher resolution than what the microscope objective used to acquire the input set of digital images normally is capable of (e.g., using conventional illumination) can be constructed. This, in turn, may allow the microscope objective used to acquire the input set to have a lower numerical aperture. The plurality of illumination patterns used when acquiring the input set of digital images may be substantially the same as (or even identical to) the plurality of illumination patterns used when acquiring the training set of digital images which is used when training the machine learning model according to the method of the first aspect. The plurality of illumination patterns used when acquiring the input set of digital images may be a subset of the plurality of illumination patterns used when acquiring the training set of digital images used when training the machine learning model according to the method of the first aspect.

A further associated advantage is that the trained machine learning model may be capable of constructing the digital image depicting the sample from an input set of digital images captured without using microscope immersion oil and/or a coverslip. Put differently, the trained machine learning model may be capable of constructing the digital image depicting the sample without needing to reduce refractive index variations in the sample. Typically, traditional FPM (i.e., reconstructing the digital image depicting the sample by iteratively transforming the input set of digital images to and from Fourier space) may perform worse without using microscope immersion oil and/or a coverslip. This, since traditional FPM assumes that the sample is thin (i.e., thin compared to a wavelength of light illuminating the sample), and surface roughness can impact the thin-sample assumption. Further, without microscope immersion oil and/or a coverslip, the sample may be in direct contact with air. This may be problematic, since the difference in refractive index between air and the sample may be relatively large, and this difference can negatively affect the performance of traditional FPM. Typically, traditional FPM may perform better when a phase shift between the sample and its surroundings is relatively small. Without microscope immersion oil and/or a coverslip, the refractive index variations within the sample may become too large (i.e., corresponding to a phase shift larger than 2π), whereby the iterative process of reconstructing the digital image may fail. It has been found that by using a machine learning model trained according to the first aspect, this requirement on refractive index variations is not as strict, thereby allowing the input set of digital images to be captured without using microscope immersion oil and/or a coverslip.

The above-mentioned features of the first aspect, when applicable, apply to this second aspect as well. In order to avoid undue repetition, reference is made to the above.

According to a third aspect, a device for training a machine learning model to construct a digital image depicting a sample is provided. The device comprising circuitry configured to execute: a first receiving function configured to receive a training set of digital images of a training sample, wherein the training set of digital images is acquired using a first microscope objective and by: illuminating the training sample with a plurality of illumination patterns, and capturing a digital image for each illumination pattern of the plurality of illumination patterns; a second receiving function configured to receive a ground truth comprising a digital image depicting the training sample, wherein the digital image of the ground truth is acquired using a second microscope objective and by: illuminating the training sample with a conventional microscopy illumination pattern, and capturing the digital image while the training sample is illuminated with the conventional microscopy illumination pattern; and a training function configured to train the machine learning model to construct a digital image depicting the training sample using the received training set of digital images and the received ground truth; and wherein the second microscope objective has a higher numerical aperture than the first microscope objective, whereby a resolution of the digital image of the ground truth is higher than a resolution of at least one digital image of the training set of digital images.

The device may be configured to train the machine learning model in accordance with the method of the first aspect.

The above-mentioned features of the first aspect and/or the second aspect, when applicable, apply to this third aspect as well. In order to avoid undue repetition, reference is made to the above.

According to a fourth aspect, a microscope system is provided. The microscope system comprising: an illumination system configured to illuminate a sample with a plurality of illumination patterns; an image sensor; a microscope objective arranged to image the sample onto the image sensor; and circuitry configured to execute: an acquisition function configured to acquire an input set of digital images by being configured to: control the illumination system to illuminate the sample with each illumination pattern of the plurality of illumination patterns, and control the image sensor to capture a digital image for each illumination pattern of the plurality of illumination patterns, and the circuitry being further configured to execute: an image construction function configured to: input the input set of digital images into a machine learning model trained according to the method of the first aspect, and receive, from the machine learning model, an output comprising a constructed digital image depicting the sample.

The illumination system may comprise a plurality of light sources.

One or more light sources of the plurality of light sources may be configured to emit polychromatic light; and wherein each illumination pattern of the plurality of illumination patterns may be formed by illuminating the sample with polychromatic light.

Each light source of the plurality of light sources may be configured to illuminate the sample from one direction of a plurality of directions.

At least one direction of the plurality of directions may correspond to an angle larger than a numerical aperture of the microscope objective.

Two or more directions of the plurality of directions may correspond to overlapping portions of a Fourier space associated with the sample; and wherein the acquisition function may be configured to control the illumination system such that each illumination pattern is formed by illuminating the sample from one or more directions corresponding to non-overlapping portions of the Fourier space associated with the sample.

The above-mentioned features of the first aspect, the second aspect, and/or the third aspect, when applicable, apply to this fourth aspect as well. In order to avoid undue repetition, reference is made to the above.

According to a fifth aspect a non-transitory computer-readable storage medium is provided. The non-transitory computer-readable storage medium comprising program code portions which, when executed on a device having processing capabilities, performs the method according to first aspect or the method according to the second aspect.

The above-mentioned features of the first aspect, the second aspect, the third aspect, and/or the fourth aspect, when applicable, apply to this fifth aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1A illustrates schematic of a microscope system suitable to acquire a training set of digital images for training a machine learning model and/or an input set of digital images for constructing a digital image depicting a sample using a trained machine learning model.
Figure 1B illustrates a schematic of a second microscope objective and a further illumination system suitable for acquiring a digital image of a ground truth.
Figure 2 illustrates a schematic of a device for training a machine learning model to construct a digital image depicting a sample.
Figure 3A is a block scheme of a method for training a machine learning model to construct a digital image depicting a sample.
Figure 3B is a block scheme of method steps for acquiring training sets of digital images for training the machine learning model.
Figure 3C is a block scheme of method steps for acquiring a digital image of the ground truth for training the machine learning model.
Figure 4A is a block scheme of a method for constructing a digital image depicting a sample.
Figure 4B is a block scheme of method steps for acquiring input sets of digital images for constructing the digital image depicting a sample.
Figure 4C is a block scheme of method steps for constructing a digital image depicting a sample.
Figure 5 is a schematic illustration of a non-transitory computer-readable storage medium.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

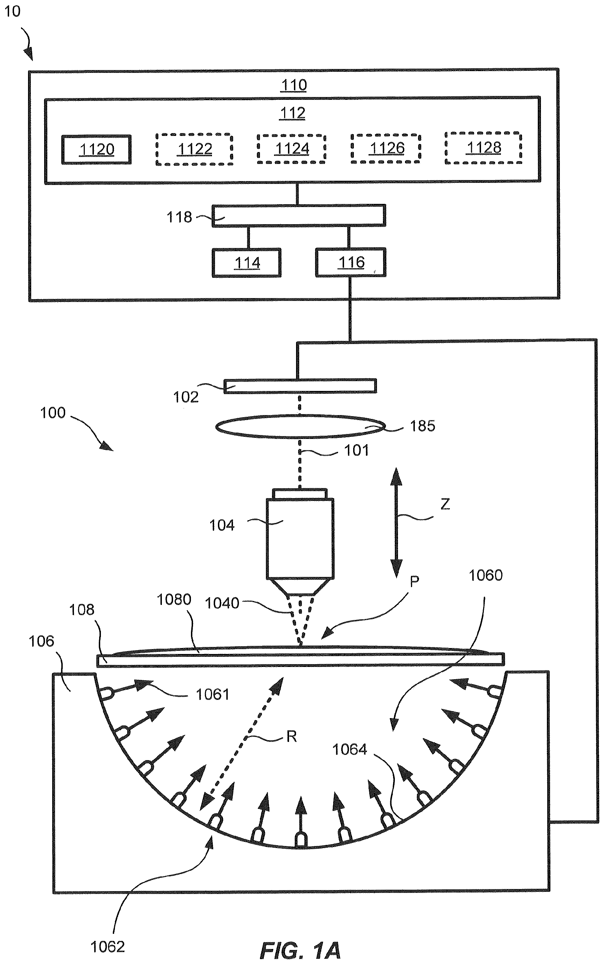

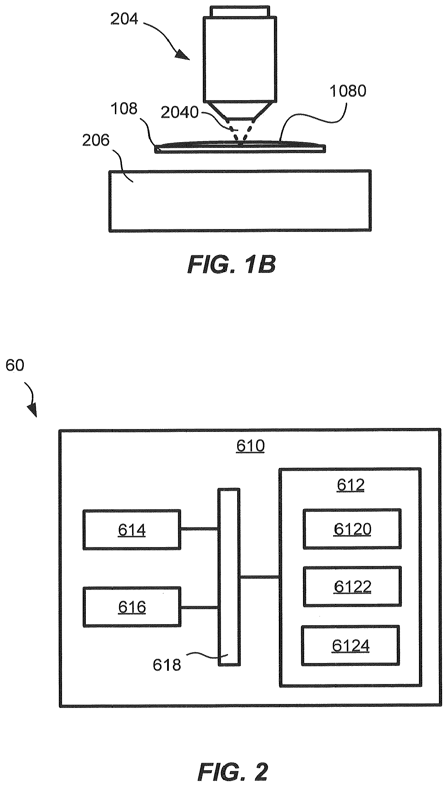

A microscope system 10 suitable for acquiring a set of digital images which may be used as a training set of digital images when training a machine learning model to construct a digital image depicting a sample and/or as an input set of digital images when using a trained machine learning model to construct a digital image depicting a sample will now be described with reference to Fig. 1A and Fig. 1B.

Figure 1A is a schematic illustration of a microscope system 10. As is seen in Fig. 1A, the microscope system 10 comprises an imaging system 100 and circuitry 110. The imaging system 100 comprises an image sensor 102, a microscope objective 104, and an illumination system 106.

The microscope system 10 may further comprise a sample positioning assembly 108. The sample positioning assembly 108 may be configured to hold a sample 1080. The sample 1080 may be a biological sample. The sample 1080 may be a cytological sample. Examples of biological samples comprise, but are not excluded to, blood, plasma, bone marrow fluid, etc. The sample may be a non-biological sample. The non-biological sample may be a manmade sample or a naturally occurring sample. Examples of non-biological samples comprise, but are not excluded to, integrated circuits, optical components, microstructures, minerals, metals, etc. The sample positioning assembly 108 may be configured to move the sample 1080. The sample positioning assembly 108 may be configured to move the sample 1080 along a plane. A normal of that plane may be substantially parallel to an optical axis 101 of the microscope objective 104. It is further to be understood that the sample positioning assembly 108 may be configured to move the sample in a direction substantially parallel to the optical axis 101 of the microscope objective 104. Put differently, the sample positioning assembly 108 may be configured to move the sample 1080 in a focusing direction of the microscope objective 104. The circuitry 110 may be configured to control the sample positioning assembly 108. For instance, the circuitry 110 may be configured to execute a sample positioning function 1124. The sample positioning function 1124 may be configured to control the position of the sample 1080 using the sample positioning assembly 108.

Even though the circuitry 110 is illustrated as a separate entity in Fig. 1A, it is to be understood that the circuitry 110 may form part of an electronic device. The electronic device may, e.g., be a computer, a server, a smartphone, etc. The electronic device may be a local electronic device (i.e., arranged in proximity to the imaging system 100) or a remote electronic device. Non-limiting examples of a remote electronic device may be a server, a cloud server, a remote computer, a remote smartphone, etc. It is further to be understood that the functionality of the circuitry 110 may be distributed over more than one electronic device. The electronic device may comprise further components, for example input devices (mouse, keyboard, touchscreen, etc.) and/or a display. As is illustrated in Fig. 1A, the circuitry 110 may comprise one or more of a memory 112, a processing unit 114, a communication interface 116, and a data bus 118. The memory 112, the processing unit 114, and the communication interface 116 may communicate (e.g., exchange data) via the data bus 118. The processing unit 114 may comprise a central processing unit (CPU) and/or a graphical processing unit (GPU). The communication interface 116 may be configured to communicate with external devices. For example, the communication interface 116 may be configured to communicate with servers, computers, external peripherals (e.g., external storage), etc. The external devices may be local devices or remote devices (e.g., a cloud server). The communication interface 116 may be configured to communicate with the external devices via an external network (e.g., a local-area network, the internet, etc.). The communication interface 116 may comprise a transceiver. The communication interface 116 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 112 may be a non-transitory computer-readable storage medium. The memory 112 may be a random-access memory. The memory 112 may be a non-volatile memory. As is illustrated in the example of Fig. 1A, the memory 112 may store program code portions 1120, 1122, 1124, 1126, 1128 corresponding to one or more functions. The program code portions 1120, 1122, 1124, 1126, 1128 may be executable by the processing unit 114, which thereby performs the functions. Hence, when it is referred to that the circuitry 110 is configured to execute a specific function, the processing unit 114 may execute program code portions 1120, 1122, 1124, 1126, 1128 corresponding to the specific function which may be stored on the memory 112. However, it is to be understood that one or more functions of the circuitry 110 may be hardware implemented and/or implemented in a specific integrated circuit. For example, one or more functions may be implemented using field-programmable gate arrays (FPGAs). Hence, one or more functions of the circuitry 110 may be implemented in hardware or software, or as a combination of the two.

Even though the image sensor 102 is illustrated as a separate entity in Fig. 1A, it is to be understood that the image sensor 102 may form part of camera. The image sensor 102 may, e.g., comprise a charge-coupled device (CCD) sensor or a complementary metal-oxide-semiconductor (CMOS) sensor. The image sensor 102 may be capable of capturing digital color images. To that end, the image sensor 102 may comprise a color filter (e.g., a Bayer filter) to allow the image sensor 102 to capture color information of light impinging on the image sensor 102. The image sensor 102 may be capable of capturing digital grayscale images, and, in such case, the image sensor 102 may not comprise a color filter. As is illustrated in the example of Fig. 1A, the image sensor 102 may communicate with the circuitry 110 via the communication interface 116. However, it is to be understood that the image sensor 102 may communicate with the circuitry 110 via the data bus 118.

The microscope objective 104 is arranged to image the sample 1080 onto the image sensor 102. For example, the microscope objective 104 may be positioned such that an object plane of the microscope objective 104 coincides with the sample 1080 and an image plane of the microscope objective 104 coincides with the image sensor 102. It is to be understood that whether an image depicting the sample 1080 is formed on the image sensor 102 may depend on the illumination of the sample 1080. For instance, in case the sample 1080 is illuminated with conventional microscope illumination (e.g., bright-field illumination), an image resembling the sample 1080 may be formed on the image sensor 110. However, in case the sample 1080 is illuminated with light from only a few directions, or even a single direction, the image forming on the image sensor 102 may not resemble the sample 1080. For instance, the sample 1080 may be illuminated with light from one or more directions corresponding to angles larger than a numerical aperture 1040 of the microscope objective 104. In such case, the image formed on the image sensor 102 may not resemble the sample 1080. However, even though the images may not resemble (or depict) the sample 1080, those images may comprise information associated with the sample 1080 and that information may be used when training the machine learning model and/or when using a trained machine learning model to construct the digital image depicting a sample.

The microscope objective 104 may be movable along a direction Z substantially parallel to the optical axis 101 of the microscope objective 104. Put differently, the microscope objective 104 may be movable in a focusing direction. The microscope objective 104 may be movable along the direction Z by being coupled to a manual and/or motorized stage (not illustrated). The microscope objective 104 and/or the sample positioning assembly 108 may be movable such that a focused image of the sample 1080 may be captured by the image sensor 102. A position of the microscope objective 104 along the direction Z may be controlled by the circuitry 110. For example, the circuitry 110 may be configured to execute a focus function 1126 configured to adjust a position of the microscope objective 104 along the direction Z. The focus function 1126 may be configured to automatically adjust the position of the microscope objective 104 along the direction Z. Put differently, the focus function 1126 may be an autofocus function. The focus function 1126 may, as in the example of Fig. 1A, control the position of the microscope objective 104 along the direction Z by communicating via the communication interface 116. However, it is to be understood that the focus function 1126 may control that position by communicating via the data bus 118.

Even though not illustrated in the example of Fig. 1A, it is to be understood that the imaging system 100 may comprise further components, e.g., one or more of an aperture, a lens, a window, color filters, etc. For instance, the imaging system 100 may further comprise a relay lens 185. The relay lens 185 may be aligned with the microscope objective 104.

The illumination system 106 is configured to illuminate the sample 1080 with a plurality of illumination patterns. The illumination system 106 may comprise a plurality of light sources 1062. The plurality of light sources 1062 may comprise one or more adjustable light sources. For instance, a color of emitted light, and/or an intensity of emitted light of the one or more adjustable light sources may be adjustable. For instance, the circuitry may be configured to control the one or more adjustable light sources. The plurality of light sources 1062 may, as is illustrated in the example of Fig. 1A, be arranged on a curved surface 1064. As illustrated in the example of Fig. 1A, the curved surface 1064 may be concave along at least one direction along the surface 1064. For example, the curved surface 1064 may be a cylindrical surface. The curved surface 1064 may be concave along two perpendicular directions along the surface. For example, the curved surface 1064 may have a shape similar to a segment of a sphere. A segment of a sphere may be a spherical cap or a spherical dome. Arranging the plurality of light sources 1062 on a curved surface 1064 may be advantageous in that a distance R from each light source to a current imaging position P of the imaging system 100 may be similar. Since this distance R is similar, an intensity of light emitted from each light source of the plurality of light sources 1062 may be similar at the current imaging position P. This may be understood as an effect of the inverse square law. Thus, the sample 1080 may be illuminated by light having similar intensities for each direction in the plurality of directions 1060, which may, in turn, allow for a more similar illumination of the sample 1080 independent of illumination direction. The distance R from each light source to the current imaging position P may be in a range from 4 cm to 15 cm. It may be advantageous to configure the illumination system 106 such that the distance R from each light source to the current imaging position P is large enough such that each light source may be treated as a point source. Hence, the distance R from each light source to the current imaging position P may be larger than 15 cm, given that an intensity of light from each light source at the current imaging position P is high enough to produce the set of digital images. However, it is to be understood that the plurality of light sources 1062 may be arranged on a flat surface or on a surface having an irregular shape. It is further to be understood that Fig. 1A illustrates a cross section of the microscope system 10, and in particular the illumination system 106. Hence, the curved surface 1064 of the illumination system 106 illustrated in Fig. 1A may be a cylindrical surface or a portion of a spherical surface (or of a quasi-spherical surface). The curved surface 1064 of the illumination system 106 may be bowl shaped. The curved surface 1064 may be formed of facets (not shown). Put differently, the curved surface 1064 may be formed of a plurality of flat surfaces. Thus, the curved surface 1064 may be piecewise flat. The curved surface 1064 may be a portion of a quasi-spherical surface comprising a plurality of facets or segments. Hence, the curved surface 1064 may be a portion of a surface of a polyhedron. An example of such polyhedron may be a truncated icosahedron. The plurality of light sources 1062 may be arranged on the facets. Each light source may be arranged such that the light source is configured to emit light in a direction substantially parallel to a normal of the associated facet. Each facet may be a flat surface having at least three sides. For instance, the curved surface 1064 may be formed of facets having five sides and facets having six sides (e.g., similar to an inner surface of a football or soccer ball). It is to be understood that each facet may be separate entities. Hence, the curved surface 1064 may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets.

One or more light sources of the plurality of light sources may be configured to emit polychromatic light. Each illumination pattern of the plurality of illumination patterns may be formed by illuminating the sample with polychromatic light. One or more light sources of the plurality of light sources may be configured to emit polychromatic light. Each illumination pattern of the plurality of illumination patterns may be formed by illuminating the sample with polychromatic light. A light source of the plurality of light sources may comprise one or more light emitters. Each light source of the plurality of light sources may comprise one or more light emitters. A light emitter may be a light-emitting diode (LED). For instance, a light source of the plurality of light sources may comprise one or more LEDs. The light emitters may be configured to emit polychromatic light and/or narrow-spectrum light (e.g., monochromatic or quasi-monochromatic light). Polychromatic light may be produced by simultaneously (or at least partly simultaneously) emitting light from two or more light emitters each configured to emit narrow-band light (e.g., light of different colors, monochromatic, and/or quasi-monochromatic light). Put differently, a light source of the one or more light sources may comprise two or more light emitters, wherein a first light emitter of the two or more light emitters may be configured to emit light having a first spectrum and a second light emitter of the two or more light emitters may be configured to emit light having a second spectrum different from the first spectrum, whereby a spectrum of the polychromatic light may comprise the first spectrum and the second spectrum. The first spectrum and the second spectrum may be partially overlapping. The first spectrum and the second spectrum may be non-overlapping. The spectrum of the polychromatic light may be continuous or non-continuous. It is to be understood that a light source may comprise a plurality of light emitters. Each light emitter of the plurality of light emitters may be configured to emit light having a respective spectrum. The spectra of light emitted by the plurality of light emitters may be partially overlapping and/or non-overlapping. In this context, polychromatic light should be understood as light having a spectrum comprising a relatively broad range of wavelengths, whereas narrow-spectrum light should be understood as light having a relatively narrow spectrum (i.e., comprising a relatively narrow range of wavelengths). For instance, one or more of white light, quasi-white light, pseudo-white light, and broad-spectrum light may be examples of polychromatic light. Monochromatic and/or quasi-monochromatic light may be examples of narrow-spectrum light. Polychromatic light may have a spectral width of 100 nm or more. Polychromatic light may have a spectral width of 400 nm or less. Polychromatic light may, in this context, correspond to electromagnetic radiation having wavelengths within the visual spectrum. Narrow-spectrum light may have a spectral width of 50 nm or less. For instance, narrow-spectrum light may have a spectral width of 20 nm or less. Polychromatic light may be emitted from an LED configured to emit white light. An LED configured to emit white light may be referred to as a white LED. A white LED may be formed by, e.g., a blue LED covered in a layer of fluorescent material which when illuminated emits white light. By using polychromatic light, the set of digital images may comprise information of the sample 1080 associated with a relatively broad range of wavelengths, especially in comparison when using narrow-band light (e.g., lasers, single-color LEDs, etc.). This may, in turn, allow the machine learning model to use more information about the sample 1080 during training and/or when constructing a digital image depicting the sample. The LEDs may be any type of LED, such as ordinary LED bulbs (i.e. traditional and inorganic LEDs), graphene LEDs, or LEDs typically found in displays (e.g. quantum dot LEDs (QLEDs) or organic LEDs (OLEDs)). However, other types of LEDs may be used as well.

Each light source of the plurality of light sources 1062 may be configured to illuminate the sample 1080 from one direction of a plurality of directions 1060. At least one direction 1061 of the plurality of directions 1060 may correspond to an angle larger than the numerical aperture 1040 of the microscope objective 104 of the imaging system 100. The numerical aperture 1040 of the microscope objective 104 may be a dimensionless number associated with a range of angles over which the microscope objective 104 accepts light. Hence, a direction 1061 corresponding to an angle larger than the numerical aperture 1040 of the microscope objective 104 (e.g., direction 1064 in Fig. 1A) may be a direction 1061 corresponding to an angle outside of (e.g., larger than) the range of angles over which the microscope objective 104 accepts light. Since the sample 1080 is illuminated from a plurality of different directions, information regarding finer details of the training sample may be captured than what normally may be resolvable by the microscope objective 104 used to image the sample 1080. This can be understood as information of different portions of Fourier space (i.e., the spatial frequency domain) associated with the sample 1080 may be captured for different illumination directions. This technique may be known in the art as Fourier ptychography. Generally in Fourier ptychography, high spatial frequencies in Fourier space associated with a sample may be sampled when that sample is illuminated from a direction corresponding to a large angle of incidence. Hence, in case the sample 1080 is illuminated from a direction 1061 corresponding to an angle larger than the numerical aperture 1040 of the microscope objective 104, even higher spatial frequencies of the Fourier space associated with the sample 1080 may be sampled. This is possible since light is scattered by the sample 1080, and a portion of the light scattered by the sample 1080 may be collected by the microscope objective 104. Illuminating the sample 1080 from a plurality of directions 1060 may further allow information regarding a refractive index (or a spatial distribution of the refractive index) associated with the sample 1080 to be captured by the microscope objective 104. This can be understood as an effect of refraction of light being dependent on an angle of incident for light illuminating the sample 1080 and the refractive index of the sample 1080. Information regarding the refractive index of the sample 1080 may, in turn, allow phase information (typically referred to as quantitative phase within the art) associated with the sample 1080 to be determined. It is to be understood that the information relating to one or more of finer details of the sample 1080, refractive index associated with the sample 1080, and phase information associated with the sample 1080 may be captured by illuminating the sample 1080 from more than one direction of the plurality of directions 1060 at a time, for example from a subset of the plurality of directions 1060. The subset of the plurality of directions may comprise directions corresponding to non-overlapping portions of the Fourier space of the sample 1080. However, two or more directions of the plurality of directions 1060 may correspond to overlapping portions of a Fourier space associated with the sample 1080. For instance, two neighboring light sources of the plurality of light sources 1062 may be configured to emit light in directions corresponding to overlapping portions of the Fourier space associated with the sample 1080.

The functions which the circuitry 110 is configured to execute depends on whether the set of digital images is to be used when training the machine learning model (i.e., as a training set of digital images) or when using the trained machine learning model to construct a digital image depicting a sample (i.e. as an input set of digital images to a trained machined learning model). However, for both of these purposes, the circuitry 110 is configured to execute an acquisition function 1120. The acquisition function 1120 is configured to acquire a set of digital images. To that end, the acquisition function 1120 is configured to control the illumination system 106 to illuminate the sample 1080 with each illumination pattern of the plurality of illumination patterns, and to control the image sensor 102 to capture a digital image for each illumination pattern of the plurality of illumination patterns. Each digital image of the set of digital images may be associated with an illumination pattern of the plurality of illumination patterns. Each illumination pattern of the plurality of illumination patterns may, e.g., be formed by simultaneously illuminating the sample 1080 from one or more directions of the plurality of directions 1060, and/or by varying a number of light sources of plurality of light sources 1062 of the illumination system 106 that emit light. The acquisition function 1120 may be configured to control and/or adjust one or more light sources of the plurality of light sources. Each illumination pattern of the plurality of illumination patterns may be formed by illuminating the sample 1080 from one or more directions corresponding to non-overlapping portions of the Fourier space associated with the sample 1080. The acquisition function 1120 may be configured to control the illumination system 106 such that each illumination pattern is formed by illuminating the sample 1080 from one or more directions corresponding to non-overlapping portions of the Fourier space associated with the sample 1080. For instance, each illumination pattern of the plurality of illumination patterns may be formed by illuminating the sample 1080 from only one direction of the plurality of directions 1060. Each illumination pattern of the plurality of illumination patterns may be formed by one or more light sources of the plurality of light sources 1062. Put differently, each illumination pattern of the plurality of illumination patterns may be formed by simultaneously emitting light from one or more light sources of the plurality of light sources 1062. However, two different illumination patterns of the plurality of illumination patterns may be formed by illuminating the sample 1080 from one or more directions corresponding to, at least partly, overlapping portions of the Fourier space associated with the sample 1080. For example, a first illumination pattern may be formed by illuminating the sample 1080 from a first set of directions corresponding to non-overlapping portions of the Fourier space associated with the sample 1080, and a second illumination pattern may be formed by illuminating the sample 1080 from a second set of directions corresponding to non-overlapping portions of the Fourier space associated with the sample 1080. A direction of the first set of directions and a direction of the second set of directions may correspond to overlapping portions of the Fourier space associated with the sample 1080. By comprising a plurality of light sources 1062, the illumination system 106 of the imaging system 100 may be able to switch between different illumination patterns quicker and/or more reliably compared to an illumination system comprising a movable light source capable of illuminating a position from different directions. The sample 1080 may be illuminated under different illumination conditions (i.e., by using different illumination patterns), and more information (e.g., information associated with a refractive index, phase, and/or finer details) of the sample 1080 may be collected by capturing digital images of the sample 1080 when it is illuminated under the different illumination conditions.

Since the acquired set of digital images may comprise information associated with one or more of fine details of the sample 1080, a refractive index associated with the sample 1080, and phase information associated with the sample 1080, this information may be used by the machine learning model (either during training or when the trained machine learning model is used to construct a digital image depicting a sample. This may, in turn, allow for a trained machine learning model able to construct the digital image depicting the sample at a higher resolution than what would be allowed in case the set of digital images was captured from only one direction. Put differently, it may allow for a trained machine learning model able to construct the digital image depicting a sample at a higher resolution than what would be allowed in case the set of digital images was captured from only one direction or using a conventional microscope (e.g., using bright-field illumination).

The acquired set of digital images may be used as a training set of digital images when training a machine learning model to construct a digital image depicting a sample. In this context, the sample 1080 may be referred to as a training sample. In that case, the circuitry 110 is configured to execute a receiving function configured to receive a ground truth comprising a digital image depicting the training sample 1080. However, the digital image of the ground truth is acquired using a second microscope objective 204. The second microscope objective 204. In the following, the microscope objective 104 of Fig. 1A may be referred to as the first microscope objective 104. The second microscope objective 204 has a higher numerical aperture than the first microscope objective 104. Figure 1B is a schematic illustration of the second microscope objective 204. Even though it is not explicitly illustrated in Fig. 1B, it is to be understood that additional optics may be used together with the second microscope objective 204. As a specific example, the second microscope objective 204 may be used in combination with a relay lens (similarly to the first microscope objective 104 and the relay lens 185 of Fig. 1A). In the example of Fig. 1B, the training sample 1080 and the sample positioning assembly 108 are positioned between the second microscope objective 204 and a further illumination system 206. The further illumination system 206 may, as in the example of Fig. 1B, comprise a conventional light source suitable for microscopy (e.g., conventional microscopy). The further illumination system 206 may be configured to illuminate the training sample 2080 with conventional microscopy illumination (e.g., bright-field illumination, dark-field illumination, etc.). It is to be understood that the further illumination system 206 may be configured to illuminate a frontside of the training sample 1080 (i.e., the side facing the second microscope objective 204) and/or a backside of the training sample 1080 (i.e., the side opposite the frontside). A key difference between the first microscope objective 104 and the second microscope objective 204 is that the second microscope objective 204 has a higher numerical aperture than the first microscope objective 104. Therefore, a resolution of the digital image of the ground truth is higher than a resolution of at least one digital image of the training set of digital images. The resolution of the digital image of the ground truth may be higher than the resolution of each digital image of the training set of digital images. The numerical aperture 1040 of the first microscope objective 104 may be 0.5 or lower. For instance, the numerical aperture 1040 of the first microscope objective 104 may be 0.4 or 0.25. The numerical aperture 2040 of the second microscope objective 204 may be 0.75 or higher. For instance, the numerical aperture 2040 of the second microscope objective 204 may be 1.25. It is to be understood that microscope immersion oil may be used when capturing the digital image of the ground truth using the second microscope objective 204. As a non-limiting example, the training set may be captured using a numerical aperture of 0.25 (corresponding to a magnification of 10x) and the digital image of the ground truth may be captured using a numerical aperture of 0.75 (corresponding to a magnification of 40x). As a further non-limiting example, the training set may be captured using a numerical aperture of 0.5 (corresponding to a magnification of 20x) and the digital image of the ground truth may be captured using a numerical aperture of 1.25 (corresponding to a magnification of 100x). It is to be understood that other combinations of numerical apertures may be used when capturing the training set and the digital image of the ground truth.

It is to be understood that the second microscope objective 204 and the further illumination system 206 may form part of a separate microscope system (not illustrated). In that case, the training set of digital images may be acquired using the microscope system 10 of Fig. 1A, and then the training sample 1080 may be moved to the separate microscope system such that the second microscope objective 204 may acquire the digital image of the ground truth. The sample 1080 may be moved automatically (e.g., by using motorized equipment) or manually between the microscope system 10 and the separate microscope system. It is, however, to be understood that the microscope system 10 of Fig. 1A may comprise the first microscope objective 104, the illumination system 106, the second microscope objective 204, and the further illumination system 206. In such case, the sample positioning assembly 108 may be configured to move the sample 1080 to a first position at which the training sample 1080 may be imaged by the first microscope objective 104 (using the illumination system 106), and to a second position at which the training sample 1080 may be imaged by the second microscope objective 204 (using the further illumination system 206). In such case, the microscope system 10 may comprise a further image sensor (not illustrated) configured to capture the digital image of the ground truth. However, the image sensor 102 of Fig. 1A may be used to capture the digital image of the ground truth. For instance, additional optics (e.g., one or more of mirrors, lenses, and beamsplitters) and/or additional components (e.g., translation stages configured to move the image sensor 102) may be used for that purpose.

The first and second microscope objectives 104, 204 may be interchangeable. For instance, the first and second microscope objectives 104, 204 may be mounted on a turret. The turret may be rotatable. Hence, depending on a current setting of the turret, either the first microscope objective 104 or the second microscope objective 204 may be in a position to image the training sample 1080 onto the image sensor 102. In such case, the illumination system 106 and the further illumination system 206 may be interchangeable (e.g., they may be moved manually or using motorized translation stages). The illumination system 106 and the further illumination system 206 may be form part of a single illumination system (not illustrated). The illumination system 106 of Fig. 1A and the further illumination system 206 may be the same illumination system. In such case, the conventional microscopy illumination pattern may be formed by a subset of the light sources of the illumination system 106 of Fig. 1A. For instance, light sources of the illumination system 106 of Fig. 1A simultaneously emitting light in directions corresponding to angles smaller than (and, possibly, equal to) the numerical aperture 2040 of the second microscope objective 204 illustrated in Fig. 1B may form an illumination pattern similar to conventional microscopy illumination (e.g., the conventional microscopy illumination pattern). Additionally, a light diffuser (not illustrated) may be positioned between the sample 1080 and the illumination system, whereby the simultaneously emitted light may be diffused. By using a light diffuser, the conventional microscopy illumination pattern may be more similar to illumination provided by a conventional microscopy illumination source.

The acquired set of digital images may be used as a training set of digital images for training a machine learning model to construct a digital image depicting a sample. To that end, the circuitry 110 may be further configured to execute a training function 1128. The training function 1128 may be configured to train the machine learning model to construct a digital image depicting a sample using the acquired training set of digital images and the acquired ground truth. The training function 1128 may be configured to train the machine learning model to correlate the training set of digital images to the ground truth (e.g., the digital image depicting the training sample). The training function 1128 may be configured to train the machine learning model iteratively and/or recursively until a difference between an output of the machine learning model (i.e., the constructed digital image) and the ground truth (i.e., the digital image depicting the training sample) is smaller than a predetermined threshold. A smaller difference between the output of the machine learning model and the ground truth may indicate a higher accuracy of the constructed digital image provided by the machine learning model. Put differently, a smaller difference between the output of the machine learning model and the ground truth may indicate that the constructed digital image may to a higher degree replicate a digital image acquired using the second microscope objective 204 and depicting the training sample 1080. Hence, preferably, the difference between the output of the machine learning model and the ground truth may be minimized. The training function 1128 may be configured to train the machine learning model to construct digital images of samples for a plurality of different sample types. In such case, the machine learning model may, for each sample type, be trained using a training set of digital images of a training sample of the sample type, and a corresponding ground truth associated with the respective sample type.

The trained machine learning model may be capable of constructing, using an input set of digital images acquired using the first imaging system 100, a digital image depicting a sample and having a resolution which is comparable (or identical) to a resolution of a digital image acquired using the second microscope objective 204 (e.g., the digital image of the ground truth used during training). Put differently, the trained machine learning model may, using the input set of digital images, construct a digital image depicting a sample and having a higher resolution than what the microscope objective used to capture the input set of digital images normally is capable of (e.g., using conventional microscopy illumination).

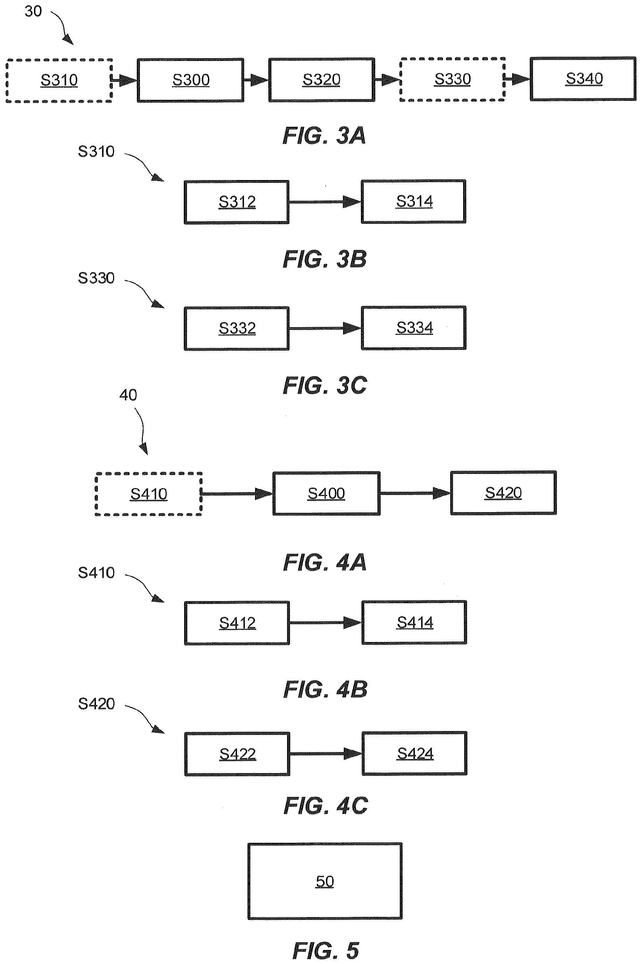

In case the acquired set of digital images is to be used as the input set of digital images for constructing a digital image depicting the sample using the trained machine learning model (e.g., trained in a manner similar to that described above and/or in connection with Fig. 2, Fig. 3A, or Fig. 3B). In that case, the circuitry 110 may be further configured to execute an image construction function 1122. The image construction function 1122 is configured to input the input set of digital images into the trained machine learning model, and receive, from the trained machine learning model, an output comprising the digital image depicting the sample 1080. Turning back to the microscope system 10 of Fig. 1A. Since the image construction function 1122 is configured to use the trained machine learning model, the input set of digital images (i.e., the set of digital images acquired using the microscope system 10 of Fig. 1A) can be acquired using the first microscope objective 104, while the image construction function 1122 is able to construct a digital image depicting a sample which is similar to a digital image depicting the sample acquired using the second microscope objective 204. Put differently, the trained machine learning model may be able to construct a digital image having a higher resolution from a set of relatively low-resolution digital images (i.e., the digital images of the input set of digital images). Thus, the trained machine learning model may allow for a less expensive microscope system 10 to be used for acquiring the input set of digital images, while still being able to construct a digital image depicting a sample which is similar to a digital image acquired using a more expensive microscope system. Put differently, after that the machine learning model has been trained, the second microscope objective may no longer be needed in order to construct a high-quality digital image of the sample, since the first microscope objective is sufficient to acquire the input set of digital images.

Even though the training of the machine learning model has been described in connection with the microscope system 10, it is to be understood that the training may be performed in a separate device 60. Figure 2 is a schematic illustration of a device 60 for training a machine learning model to construct a digital image depicting a sample. The device 60 of Fig. 2 may be a computing device (e.g., a computer, a server, a cloud server, a smartphone, etc.). The device 60 may comprise further components, for example input devices (mouse, keyboard, touchscreen, etc.) and/or a display. The device 60 comprises circuitry 610. The circuitry 610 illustrated in Fig. 2 may be similar to the circuitry 110 described in connection with Fig. 1A and Fig. 1B. Hence, the circuitry 610 illustrated in Fig. 2 may comprise one or more of a memory 612, a processing unit 614, a communication interface 616, and a data bus 618. The description of the corresponding features of the circuitry 110 of Fig. 1A, when applicable, apply to these features of circuitry 610 of Fig. 2. In order to avoid undue repetition, reference is made to the above. The circuitry 610 is configured to execute a first receiving function 6120, a second receiving function 6122, and a training function 6124. The first receiving function 6120 is configured to receive a training set of digital images. As described above, the set of digital images acquired using the microscope system 10 illustrated in Fig. 1A may be used as the training set of digital images. Hence, the first receiving function 6120 may be configured to receive the training set of digital images from the circuitry 110 illustrated in Fig. 1A. It is however to be understood that the first receiving function 6120 may be configured to receive the training set of digital images from other sources as well. For instance, the training set of digital images may be stored on a remote device (e.g., a server, etc.) or on a local device (e.g., a computer, on the memory 612, etc.), and the first receiving function 6120 may be configured to receive the training set of digital images therefrom. The first receiving function 6120 may receive the training set of digital images via the communication interface 616. As further described above, the training set of digital images is acquired using the first microscope objective 104, and by: illuminating the training sample 1080 with a plurality of illumination patterns, and capturing a digital image for each illumination pattern of the plurality of illumination patterns. The second receiving function 6122 is configured to receive a ground truth comprising a digital image depicting the training sample 1080. The digital image of the ground truth is acquired using the second microscope objective 204, and by: illuminating the training sample 1080 with a conventional microscopy illumination pattern, and capturing the digital image while the training sample 1080 is illuminated with the conventional microscopy illumination pattern. As described above, the second microscope objective 204 has a higher numerical aperture than the first microscope objective 104, whereby a resolution of the digital image of the ground truth is higher than a resolution of at least one digital image of the training set of digital images. The digital image of the ground truth may be acquired as described in connection with Fig. 1A and Fig. 1B. The second receiving function 6122 may be configured to receive the digital image of the ground truth from a microscope system used to capture the digital image of the ground truth. For example, in case the microscope system 10 of Fig. 1A (with the second microscope objective 204 and, possibly, the further illumination system 206 illustrated in Fig. 1B) is used to acquire the digital image of the ground truth, the second receiving function 6122 may be configured to receive the digital image of the ground truth from the circuitry 110 illustrated in Fig. 1A. It is however to be understood that the second receiving function 6122 may be configured to receive the digital image of the ground truth from other sources as well. For instance, the digital image of the ground truth may be stored on a remote device (e.g., a server, etc.) or on a local device (e.g., a computer, on the memory 612, etc.), and the second receiving function 6122 may be configured to receive the digital image of the ground truth therefrom. The second receiving function 6122 may receive the digital image of the ground truth via the communication interface 616. The training function 6124 is configured to train a machine learning model to construct a digital image depicting a sample using the received training set of digital images and the received ground truth. The training function 6124 of Fig. 2 may be configured to train the machine learning model in the same manner as the training function 1128 of Fig. 1A. In order to avoid unnecessary repetition, reference is made to the above.

Figure 3A is a box scheme of a method 30 for training a machine learning model to construct a digital image depicting a sample. The method 30 of Fig. 3A may be a computer-implemented method. The method 30 comprises receiving S300 a training set of digital images of a training sample 1080. The training set of digital images is, as illustrated in Fig. 3B, acquired S310 using a first microscope objective 104 and by: illuminating S312 the training sample 1080 with a plurality of illumination patterns, and capturing S314 a digital image for each illumination pattern of the plurality of illumination patterns. It is to be understood that the method 30 may comprise acquiring S310 the training set of digital images. Hence, the method 30 may, as illustrated in Fig. 3B, further comprise acquiring S310 the training set of digital images using a first microscope objective 104 and by: illuminating S312 the training sample 1080 with a plurality of illumination patterns, and capturing S314 a digital image for each illumination pattern of the plurality of illumination patterns.

The method 30 further comprises receiving S320 a ground truth comprising a digital image depicting the training sample 1080. The digital image of the ground truth is, as illustrated in Fig. 3C, acquired S330 using a second microscope objective 204 and by: illuminating S332 the training sample 1080 with a conventional microscopy illumination pattern, and capturing S334 the digital image while the training sample 1080 is illuminated with the conventional microscopy illumination pattern. The second microscope objective 204 has a higher numerical aperture than the first microscope objective 104, whereby a resolution of the digital image of the ground truth is higher than a resolution of at least one digital image of the training set of digital images. It is to be understood that the method 30 may comprise acquiring S330 the digital image of the ground truth. Hence, the method 30 may, as illustrated in Fig. 3C, further comprise acquiring S330 the digital image of the ground truth using a second microscope objective and by: illuminating S332 the training sample 1080 with the conventional microscopy illumination pattern, and capturing S334 the digital image of the ground truth while the training sample 1080 is illuminated with the conventional microscopy illumination pattern.

The method 30 further comprises training S340 the machine learning model to construct a digital image depicting a sample using the received training set of digital images and the received ground truth. Each illumination pattern of the plurality of illumination patterns may be formed by illuminating the training sample 1080 using one or more light sources of a plurality of light sources 1062. The light sources of the plurality of light sources may be light-emitting diodes configured to emit polychromatic light. Each illumination pattern of the plurality of illumination patterns may be formed by illuminating the training sample 1080 with polychromatic light. Each light source of the plurality of light sources 1062 may be configured to illuminate the training sample 1080 from one direction of a plurality of directions 1060. At least one direction 1061 of the plurality of directions 1060 may correspond to an angle larger than a numerical aperture 1040 of the first microscope objective 104. Two or more directions of the plurality of directions 1060 may correspond to overlapping portions of a Fourier space associated with the training sample 1080. Each illumination pattern of the plurality of illumination patterns may be formed by illuminating the training sample 1080 from one or more directions corresponding to non-overlapping portions of the Fourier space associated with the training sample 1080. The method 30 of Fig. 3A, Fig. 3B, and/or Fig. 3C may be performed using the microscope system 10 illustrated in Fig. 1A and Fig. 1B.

Figure 4A is a block scheme of a method 40 for constructing a digital image depicting a sample. The method 40 of Fig. 4A may be a computer-implemented method. The method 40 comprises receiving S400 an input set of digital images of the sample. The input set of digital images is, as illustrated in Fig. 4B, acquired S410 by illuminating S412 the sample with a plurality of illumination patterns and capturing S414 a digital image for each illumination pattern of the plurality of illumination patterns. It is to be understood that the method 40 may comprise acquiring S410 the input set of digital images. Hence, the method 40 may, as illustrated in Fig. 4B, further comprise acquiring S410 the input set of digital images by: illuminating S412 the sample with a plurality of illumination patterns, and capturing S414 a digital image for each illumination pattern of the plurality of illumination patterns. As is illustrated in Fig. 4A and Fig. 4C, the method 40 further comprises constructing S420 a digital image depicting the sample by: inputting S422 the input set of digital images into a machine learning model trained according to the method 30 described previously. As is illustrated in Fig. 4A and Fig. 4C, the method 40 further comprises receiving S424, from the machine learning model, an output comprising the digital image depicting the sample. The method 40 of Fig. 4A, Fig. 4B, and/or Fig. 4C may be performed using the microscope system 10 illustrated in Fig. 1A and Fig. 1B or using the device 60 illustrated in Fig. 2.

Figure 5 is a schematic illustration of a non-transitory computer-readable storage medium 50. The non-transitory computer-readable storage medium 50 comprises program code portions which, when executed on a device having processing capabilities, performs the method 30 illustrated in Fig. 3A or the method 40 illustrated in Fig. 4A and Fig. 4C.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as Swin!R. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value and/or color value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is, however, to be understood that the machine learning model may take further input during training. In this specific case, the machine learning model is trained using a training set of digital images and a ground truth. The first training set of digital images is acquired in a manner similar to the acquisition of the first input set of digital images. Put differently, the illumination patterns used when acquiring the training set of digital images and the input set of digital images may be similar or identical. The machine learning model may be trained using the training set of digital images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to construct digital images of a wider range of sample types and/or with higher accuracy.

The person skilled in the art realizes that the present inventive concept by no means is limited to the preferred variants described above. On the contrary, many modifications and variations are possible within the scope of the appended claims.

For instance, in Fig. 4A, it is illustrated that a backside of the sample 1080 is illuminated. However, it is to be understood that the illumination system 106 may alternatively or additionally be configured to illuminate a frontside (i.e., the side of the sample 1080 facing the microscope objective 104) of the sample 1080. Hence, an illumination pattern may be formed by illuminating the backside and/or the frontside of the sample 1080.

Additionally, variations to the disclosed variants can be understood and effected by the skilled person in practicing the claimed invention, from a study of the drawings, the disclosure, and the appended claims.

## Claims

1. A method (30) for training a machine learning model to construct a digital image depicting a sample, the method (30) comprising:
receiving (S300) a training set of digital images of a training sample (1080), wherein the training set of digital images is acquired (S310) using a first microscope objective (104) and by: illuminating (S312) the training sample (1080) with a plurality of illumination patterns, and capturing (S314) a digital image for each illumination pattern of the plurality of illumination patterns;
receiving (S320) a ground truth comprising a digital image depicting the training sample (1080), wherein the digital image of the ground truth is acquired (S330) using a second microscope objective (204) and by:
illuminating (S332) the training sample with a conventional microscopy illumination pattern, and capturing (S334) the digital image while the training sample (1080) is illuminated with the conventional microscopy illumination pattern; and
training (S340) the machine learning model to construct a digital image depicting the training sample (1080) using the received training set of digital images and the received ground truth; and
wherein the second microscope objective (204) has a higher numerical aperture than the first microscope objective (104), whereby a resolution of the digital image of the ground truth is higher than a resolution of at least one digital image of the training set of digital images.

2. The method (30) according to claim 1, wherein each illumination pattern of the plurality of illumination patterns is formed by illuminating the training sample (1080) using one or more light sources of a plurality of light sources.

3. The method (30) according to claim 2, wherein one or more light sources of the plurality of light sources (1062) are configured to emit polychromatic light; and wherein each illumination pattern of the plurality of illumination patterns is formed by illuminating the training sample (1080) with polychromatic light.

4. The method (30) according to claim 2 or 3, wherein each light source of the plurality of light sources (1062) is configured to illuminate the training sample (1080) from one direction of a plurality of directions (1060).

5. The method (30) according to claim 4, wherein at least one direction of the plurality of directions (1060) corresponds to an angle larger than a numerical aperture (1040) of the first microscope objective (104).

6. The method (30) according to any one of claims 4 or 5, wherein two or more directions of the plurality of directions (1060) correspond to overlapping portions of a Fourier space associated with the training sample (1080), and wherein each illumination pattern is formed by illuminating the training sample (1080) from one or more directions corresponding to non-overlapping portions of the Fourier space associated with the training sample (1080).

7. A method (40) for constructing a digital image depicting a sample, the method (40) comprising:
receiving (S400) an input set of digital images of the sample, wherein the input set of digital images is acquired (S410) by illuminating (S412) the sample with a plurality of illumination patterns and capturing (S414) a digital image for each illumination pattern of the plurality of illumination patterns;
constructing (S420) a digital image depicting the sample by:
inputting (S422) the input set of digital images into a machine learning model being trained according to the method (30) of any one of claims 1 - 6, and
receiving (S424), from the machine learning model, an output comprising the digital image depicting the sample.

8. A device (60) for training a machine learning model to construct a digital image depicting a sample, the device (60) comprising circuitry (610) configured to execute:
a first receiving function (6120) configured to receive a training set of digital images of a training sample (1080), wherein the training set of digital images is acquired using a first microscope objective (104) and by:
illuminating the training sample (1080) with a plurality of illumination patterns, and capturing a digital image for each illumination pattern of the plurality of illumination patterns;
a second receiving function (6122) configured to receive a ground truth comprising a digital image depicting the training sample (1080), wherein the digital image of the ground truth is acquired using a second microscope objective (204) and by: illuminating the training sample (1080) with a conventional microscopy illumination pattern, and capturing the digital image while the training sample (1080) is illuminated with the conventional microscopy illumination pattern; and
a training function (6124) configured to train the machine learning model to construct a digital image depicting the training sample using the received training set of digital images and the received ground truth; and
wherein the second microscope objective (204) has a higher numerical aperture than the first microscope objective (104), whereby a resolution of the digital image of the ground truth is higher than a resolution of at least one digital image of the training set of digital images;.

9. A microscope system (10) comprising:
an illumination system (106) configured to illuminate a sample (1080) with a plurality of illumination patterns;
an image sensor (102);
a microscope objective (104) arranged to image the sample (1080) onto the image sensor (102); and
circuitry (100) configured to execute:
an acquisition function (1120) configured to acquire an input set of digital images by being configured to:
control the illumination system (106) to illuminate the sample (1080) with each illumination pattern of the plurality of illumination patterns, and
control the image sensor (102) to capture a digital image for each illumination pattern of the plurality of illumination patterns, and
the circuitry (100) being further configured to execute:
an image construction function (1122) configured to:
input the input set of digital images into a machine learning model trained according to the method of any one of claims 1 - 6, and
receive, from the machine learning model, an output comprising a constructed digital image depicting the sample.

10. The microscope system (10) according to claim 9, wherein the illumination system (106) comprises a plurality of light sources (1062).

11. The microscope system (10) according to claim 10, wherein one or more light sources of the plurality of light sources (1062) are configured to emit polychromatic light; and wherein each illumination pattern of the plurality of illumination patterns is formed by illuminating the sample (1080) with polychromatic light.

12. The microscope system (10) according to claim 10 or 11, wherein each light source of the plurality of light sources (1062) is configured to illuminate the sample (1080) from one direction of a plurality of directions (1060).

13. The microscope system (10) according to claim 12, wherein at least one direction of the plurality of directions (1060) corresponds to an angle larger than a numerical aperture (1040) of the microscope objective (104).

14. The microscope system (10) according to claim 12 or 13, wherein two or more directions of the plurality of directions (1060) correspond to overlapping portions of a Fourier space associated with the sample (1080); and wherein the acquisition function (1120) is configured to control the illumination system (106) such that each illumination pattern is formed by illuminating the sample (1080) from one or more directions corresponding to non-overlapping portions of the Fourier space associated with the sample (1080).

15. A non-transitory computer-readable storage medium (50) comprising program code portions which, when executed on a device having processing capabilities, performs the method (30) according to any one of claims 1 - 6 or the method (40) according to claim 7.
